# DEMANDE DE BREVET EUROPEEN

(11) **EP 1 879 430 A1**
(43) Date de publication de la demande: **16.01.2008**
(21) Numéro de dépôt: 07354036.1
(22) Date de dépôt: 14.06.2007
(51) Int. Cl.: H05B 33/08, H05B 37/02, F21V 23/04

(54) **Lampe électrique fiabilisée**

(30) Priorité: 20.06.2006 US 814898 P; 28.07.2006 FR 0606943
(71) Demandeur: ZEDEL, 38920 Crolles (FR)
(72) Inventeur: Petzl, Paul, 38530 Barraux (FR); Bouzghoub, Omar, 38420 Domene (FR); Morey, Gilles, 1276 Gingins (CH)
(74) Mandataire: Jouvray, Marie-Andrée

(57) **Abrégé**

La lampe comporte au moins une diode électroluminescente et un interrupteur électronique de puissance (T1), connectés en série entre une source d'énergie (2) et la diode électroluminescente (LED). L'interrupteur électronique de puissance est contrôlé par un circuit électronique de traitement (3) en fonction de l'état d'une touche de commande (T), connectée à une entrée de commande (E1) du circuit électronique de traitement. La touche (T) est connectée en parallèle sur l'interrupteur électronique de puissance (T1). Pour détecter et reconstituer l'état de la touche (T), le circuit électronique de traitement (3) applique périodiquement des impulsions fines de blocage sur une électrode de commande de l'interrupteur électronique de puissance (T1).

## Description

### Domaine technique de l'invention

L'invention concerne une lampe électrique comportant au moins une diode électroluminescente et un interrupteur électronique de puissance, connecté en série entre une source d'énergie et la diode électroluminescente et contrôlé par un circuit électronique de traitement en fonction de l'état d'un interrupteur de commande connecté à une entrée de commande du circuit électronique de traitement.

### État de la technique

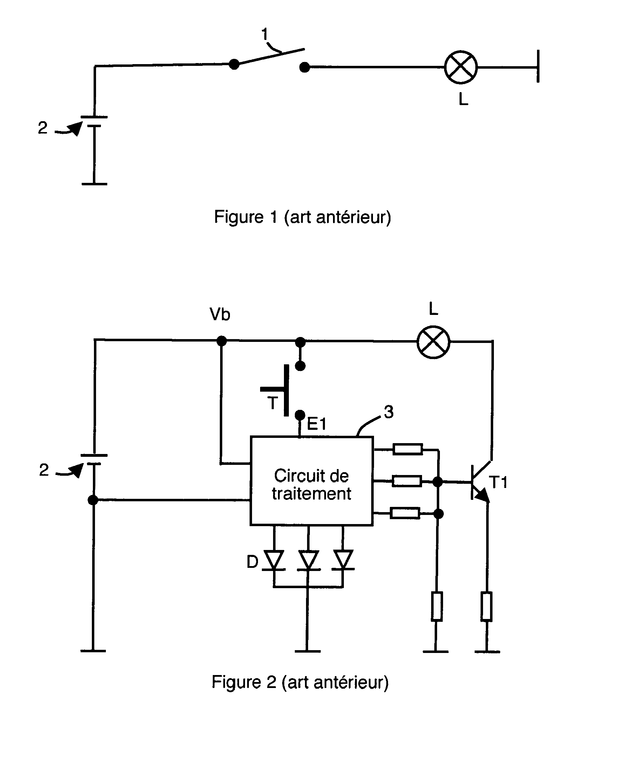

Comme représenté à la figure 1, un interrupteur de commande 1 est classiquement intercalé entre une source d'énergie, par exemple une batterie 2, et une lampe L, pour contrôler l'allumage et l'extinction de la lampe.

Pour permettre différents modes de fonctionnement d'une lampe, un circuit électronique de traitement, également alimenté par la batterie 2 et comportant une entrée de commande, peut contrôler un interrupteur électronique de puissance.

Ainsi, le modèle d'utilité allemand DE 29600938U décrit une lampe, plus particulièrement une lampe de vélo, pouvant s'éclairer à différentes intensités. Comme représenté à la figure 2, dans ce document, un interrupteur de commande, constitué par une touche de commande T, est connecté entre la tension d'alimentation Vb et l'entrée de commande E1 du circuit électronique de traitement 3. Celui-ci comporte trois sorties distinctes, connectées par l'intermédiaire de trois résistances correspondantes, à l'électrode de commande d'un transistor T1 constituant l'interrupteur électronique de puissance. Le niveau de puissance (50%, 75% ou 100%) fourni à la lampe L est déterminé, en fonction de la durée d'appui sur la touche T, par le choix de la sortie activée par le circuit électronique de traitement 3. Des diodes D de signalisation, connectées à d'autres sorties du circuit électronique de traitement 3, peuvent signaler le niveau de puissance de la lampe et/ou indiquer un niveau insuffisant de charge de la batterie.

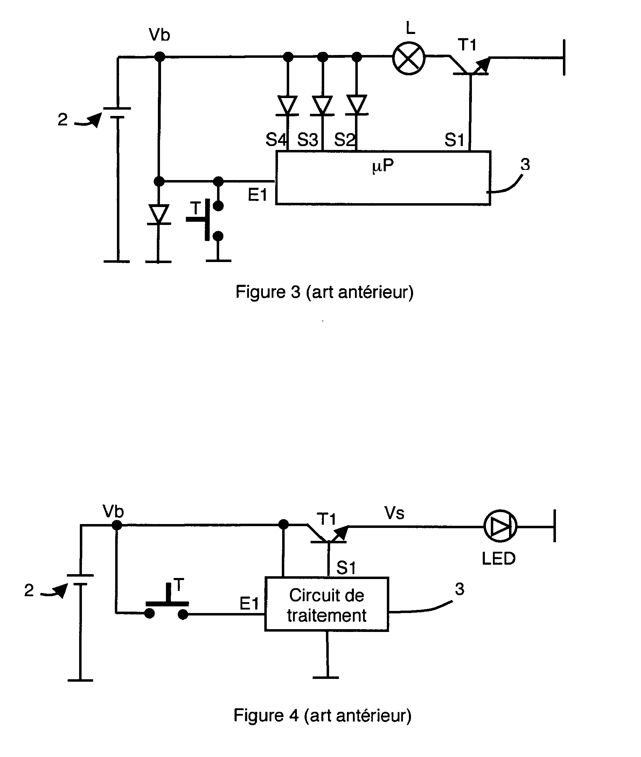

Le brevet US 6017140 décrit également une lampe de vélo multifonction, commandée par une touche de commande. Dans ce mode de réalisation, illustré à la figure 3, le circuit électronique de traitement 3 est constitué par un microprocesseur (µP) et l'électrode de commande du transistor T1 est connectée à une seule sortie S1 du circuit électronique de traitement. La touche T est, quant à elle, connectée, en parallèle avec une diode, entre l'entrée de commande E1 et la masse. L'entrée de commande E1 est connectée directement à l'alimentation (Vb). D'autres sorties, S2 à S4, du circuit électronique de traitement sont connectées à des diodes électroluminescentes. Le choix du mode de fonctionnement s'effectue séquentiellement en fonction du nombre d'appuis sur la touche T : puissance maximale Pmax au 1 er appui, mode éclairage de détresse (clignotement de la diode connectée à la sortie S2 ou allumage continu de la diode connectée à la sortie S3) au 2nd, simultanément puissance Pmax et éclairage de détresse au 3ème appui, mi-puissance (Pmax/2) au 4ème appui et extinction au 5ème appui. La sortie S4 permet de signaler l'état de la charge de la batterie.

De manière plus générale, le brevet US 6249089 décrit la commande de divers modes de fonctionnement d'une lampe, sous le contrôle d'une touche T, constituant la seule interface avec l'utilisateur et disposée en dehors du circuit de puissance reliant la batterie à la lampe. Les divers modes de fonctionnement peuvent dépendre du nombre d'appuis sur la touche, de l'intervalle entre deux appuis et/ou de la durée d'un appui.

Une lampe frontale à diodes électroluminescentes commercialisée par la société Petzl sous la dénomination Tikka Plus® est illustrée schématiquement à la figure 4. Comme les précédentes, cette lampe comporte une touche de commande T entre la tension Vb de la batterie et l'entrée E1 du circuit de traitement 3 et la sortie S1 du circuit de traitement contrôle un transistor de puissance T1. Le circuit de traitement comporte deux bornes d'alimentation, respectivement connectées à la tension Vb de la batterie 2 et à la masse. Les divers modes de fonctionnement sont contrôlés en fonction du nombre d'appuis sur la touche et/ou de la durée d'appui et/ou de l'intervalle entre 2 appuis.

Dans tous les modes de réalisation précités permettant un fonctionnement multifonction, la défaillance éventuelle d'un composant électronique rend la lampe totalement inutilisable.

### Objet de l'invention

L'objet de l'invention a pour but une lampe multifonction ne présentant pas les inconvénients des lampes connues.

Cet objet est atteint par un dispositif selon les revendications annexées et plus particulièrement par le fait que l'interrupteur de commande est connecté en parallèle sur l'interrupteur électronique de puissance et que le circuit électronique de traitement comporte des moyens de détection de l'état de l'interrupteur de commande appliquant périodiquement sur une électrode de commande de l'interrupteur électronique de puissance des impulsions fines de blocage de l'interrupteur électronique de puissance.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une lampe selon l'art antérieur.
Les figures 2 à 4 illustrent divers modes de réalisation de lampes multifonction selon l'art antérieur.
Les figures 5 et 6 illustrent deux variantes de réalisation d'une lampe selon l'invention.
Les figures 7 à 10 illustrent, pour un même état A1 de la touche de commande T (figure 7), les valeurs correspondantes de la tension Vs de sortie du transistor de puissance T1 dans une lampe selon la figure 4 (figure 8), les signaux A2 fournis par la sortie S1 (figure 9) et les valeurs correspondantes de la tension Vs dans une lampe selon l'invention (figure 10).

### Description d'un mode préférentiel de l'invention

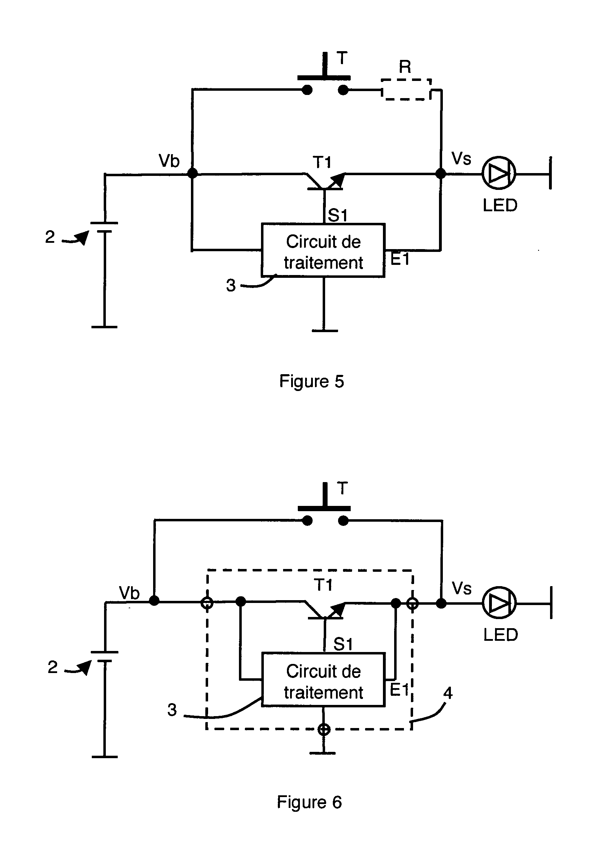

Comme représenté à la figure 5, la touche de commande T est connectée en parallèle sur le transistor de puissance T1, qui est , comme sur la figure 4, connecté en série entre la batterie 2 et au moins une diode électroluminescente (LED) et contrôlé par les signaux A2 fournis par la sortie S1 du circuit de traitement 3. Celui-ci est, comme sur la figure 4 alimenté par la batterie 2.

L'entrée E1 du circuit de traitement 3 est alors connectée au point commun au transistor de puissance T1, à la touche de commande T et à la diode électroluminescente (LED). Les signaux appliqués sur l'entrée E1 correspondent donc à la tension Vs de sortie du transistor de puissance T1.

Dans ce mode de réalisation, l'interrupteur de puissance, connecté en série avec la diode électroluminescente (LED) aux bornes de la batterie 2, comporte ainsi 2 branches en parallèle :
- une 1ère branche constituée par la touche de commande T, normalement ouverte,
- une 2nde branche constituée par le transistor T1, contrôlé par le circuit électronique de traitement 3.
Lorsque la 1 ère branche est fermée, c'est-à-dire pendant un appui sur la touche, la tension Vs reste constamment égale à la tension Vb de la batterie, quel que soit l'état du transistor de puissance. Lorsque la 1 ère branche est ouverte, la tension Vs est contrôlée par le circuit de traitement 3, par l'intermédiaire du transistor de puissance T1.

Le circuit électronique de traitement 3 comporte, de plus, des moyens de détection et de reconstitution de l'état de la touche de commande T. En effet, bien que l'entrée E1 soit connectée à la batterie 2 par l'intermédiaire de la touche de commande T, la mise en parallèle de la touche de commande T et du transistor de puissance T1 ne permet pas au circuit électronique de traitement 3 de lire directement l'état de la touche lorsque le transistor de puissance T1 conduit. Pour permettre au circuit électronique de traitement de détecter et reconstituer l'état de la touche de commande T pour contrôler en conséquence le transistor de puissance, le circuit électronique de traitement 3 applique périodiquement sur l'électrode de commande du transistor de puissance T1 des impulsions fines de blocage du transistor de puissance T1 et surveille la tension Vs aux bornes de la diode électroluminescente.

Le transistor de puissance T1 et le circuit de traitement 3 sont, de préférence, comme sur la figure 5, constitués par des composants distincts. Ils peuvent éventuellement être intégrés dans une puce électronique commune. Dans la variante de réalisation illustrée à la figure 6, la puce électronique 4 comporte 3 bornes seulement. Deux bornes d'alimentation sont respectivement connectées à la tension Vb de la batterie 2 et à la masse et une borne d'entrée/sortie est connectée à la touche T et à la lampe (LED). La touche T est connectée entre la borne d'alimentation connectée à la tension Vb et la borne d'entrée/sortie. Les connexions entre le transistor de puissance et le circuit électronique de traitement sont réalisées à l'intérieur de la puce 4.

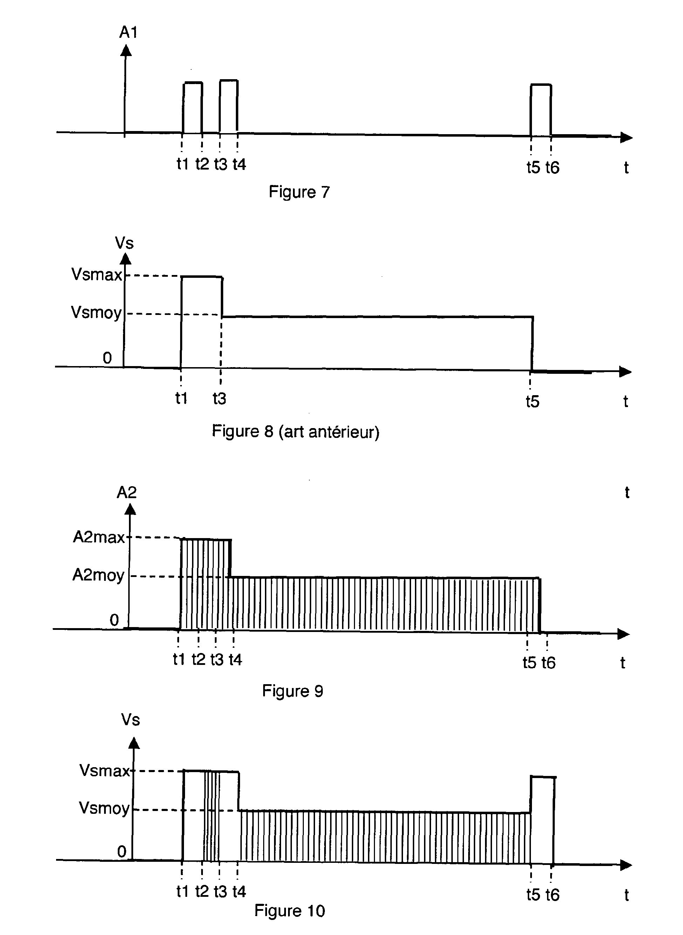

Le fonctionnement de la lampe selon les figures 5 et 6 est explicité ci-dessous, en référence aux figures 7 à 10. Ces figures permettent de comparer le fonctionnement d'une lampe selon la figure 4 et d'une lampe selon la figure 5 ou 6 pour les mêmes états (A1) de la touche T et les mêmes modes d'éclairage successifs.

Dans l'exemple représenté à la figure 7, la lampe étant initialement éteinte, la commande de la lampe est constituée par deux appuis successifs, respectivement entre les instants t1 et t2 et entre les instants t3 et t4, puis, après un intervalle de temps de plus de 2s, par un nouvel appui sur la touche T, entre les instants t5 et t6. La touche de commande T, normalement ouverte, n'est donc fermée qu'entre les instants t1 et t2, t3 et t4, t5 et t6.

Dans la lampe selon la figure 4, les signaux A1 de la figure 7, représentatifs de l'état de la touche de commande T, correspondent aux signaux appliqués à l'entrée E1 du circuit de traitement 3. Le circuit électronique de traitement fournit alors sur sa sortie S1 des signaux de contrôle du transistor de puissance T1 provoquant successivement, dans l'exemple illustré sur la figure 8, qui représente la tension Vs de sortie du transistor de puissance T1, c'est-à-dire la tension aux bornes de la lampe :
- dès le 1^{er} appui, c'est-à-dire à partir de l'instant t1, l'éclairement de la lampe à un niveau d'éclairage maximum, dans lequel la tension Vs et la puissance sont maximales (Vsmax et Pmax),
- après deux appuis courts successifs, c'est-à-dire à partir de l'instant t3, le passage à un niveau d'éclairage optimum, dans lequel la tension Vs et la puissance correspondante diminuent (Vsmoy et Pmoy),
- l'extinction de la lampe (Vs=0) lors du nouvel appui sur la touche après un intervalle de temps (t4-t5) de plus de 2s, c'est-à-dire à l'instant t5.

Dans la lampe selon la figure 5 ou 6, le circuit de traitement modifie les signaux A2 appliqués, par sa sortie S1, sur l'électrode de commande du transistor de puissance T1, de manière à lui appliquer périodiquement les impulsions fines de blocage. Lors du 1^{er} appui sur la touche T, à l'instant t1, la diode électroluminescente (LED) ainsi que l'entrée E1 du circuit de traitement sont directement connectées à la batterie par la 1^{ère} branche de l'interrupteur. Le signal Vs, initialement à zéro, passe ainsi à la tension Vsmax=Vb. Comme précédemment la lampe s'éclaire ainsi à son niveau d'éclairage maximum lors du 1^{er} appui sur la touche. Le circuit de traitement 3, en réponse au passage à Vb de la tension appliquée sur son entrée E1, fait alors passer le signal A2, initialement à zéro, à une valeur maximale, A2max, de manière à fermer la 2^{nde} branche de l'interrupteur.

Le circuit de traitement 3 met ensuite le signal A2 périodiquement à zéro, pendant des instants très courts, par exemple pendant 1 ms toutes les 100ms. Ceci provoque périodiquement le blocage du transistor de puissance T1. Cependant, bien que la 2^{nde} branche (T1) de l'interrupteur de puissance soit alors périodiquement ouverte, tant que la touche de commande T reste fermée (entre les instants t1 et t2), la 1^{ère} branche (T) de l'interrupteur de puissance reste constamment fermée et la tension Vs reste à sa valeur maximale Vsmax=Vb. La diode électroluminescente (LED) est en effet directement connectée par la touche T à la batterie. Le signal Vs reste donc inchangé (à Vsmax) jusqu'au relâchement de la touche de commande T par l'utilisateur, à l'instant t2.

À l'instant t2, la 1^{ère} branche de l'interrupteur s'ouvre, mais la tension Vs, qui ne dépend plus que de l'état du transistor de puissance T1, reste à Vsmax, en fonction de la valeur de la tension A2, qui lui est appliquée depuis l'instant t1. Cependant, la tension Vs passe alors périodiquement à zéro, provoquant ainsi des microcoupures, lors de l'application des impulsions fines de blocage sur son électrode de commande. La durée des impulsions fines est choisie de manière ce que les microcoupures périodiques de la lampe, provoquées par ces fines impulsions de remise à zéro de la tension Vs et correspondant à une ouverture simultanée des deux branches de l'interrupteur de puissance, ne soient pas perceptibles par l'oeil.

Lors du nouvel appui sur la touche T, à l'instant t3, le transistor de puissance T1 est de nouveau court-circuité par la touche T et les impulsions fines de blocage ne sont plus transmises à la tension Vs, qui reste inchangée.

Avant le relâchement de la touche T, à l'instant t4, le circuit de traitement 3 a cependant détecté l'état (A1) de la touche de commande T à partir des signaux Vs appliqués sur son entrée E1. En effet, lorsque la tension Vs n'est pas nulle, la présence d'impulsions fines de remise à zéro ou microcoupures dans le signal Vs signifie que la touche T est ouverte. Par contre, leur absence pendant une durée supérieure à l'intervalle entre deux impulsions fines de blocage, signifie que la touche T est fermée et court-circuite le transistor de puissance T1. Le circuit de traitement peut ainsi reconstituer les signaux illustrés à la figure 7 et utiliser ces signaux reconstitués pour contrôler le transistor de puissance T1.

Dans l'exemple représenté à la figure 9, le circuit de traitement fait passer le signal A2 de contrôle du transistor de puissance T1 à sa valeur moyenne A2moy entre les instants t3 et t4, après avoir détecté un 2^{nd} appui sur la touche T, par l'absence, à partir de l'instant t3, d'impulsions fines de remise à zéro dans le signal Vs appliqué à son entrée E1. La touche T court-circuitant le transistor de puissance T1 jusqu'à l'instant t4, la tension Vs reste néanmoins à sa valeur maximale Vsmax=Vb jusqu'à l'instant t4 et ne peut passer à la valeur Vsmoy qu'à l'instant t4, lorsque la touche T est relâchée.

Dans l'exemple représenté, la touche n'est plus actionnée jusqu'à l'instant t5. Pendant la période t4-t5, les signaux A2 et Vs restent donc inchangés et le circuit de traitement 3 considère qu'il n'y a pas eu de nouvel appui sur la touche T en raison la présence constante des impulsions fines de remise à zéro dans le signal Vs.

Lors du nouvel appui sur la touche T, à l'instant t5, la tension Vs repasse automatiquement à la valeur Vb jusqu'au relâchement de la touche à l'instant t6. Pendant la période t5-t6, les impulsions de blocage ne sont plus transmises à la tension Vs. Le circuit électronique de traitement 3 peut, en conséquence, détecter rapidement ce nouvel appui sur la touche et modifier le signal de commande A2 pour tenir compte de ce nouvel appui. Dans l'exemple représenté à la figure 9, la période t4-t5 étant supérieure à 2s, le circuit électronique de traitement met à zéro le signal A2, dès détection de ce nouvel appui (entre les instants t5 et t6) pour bloquer le transistor de puissance T1 et, ainsi, éteindre la lampe dès relâchement de la touche, à l'instant t6.

Dans une variante de réalisation, une résistance de limitation R (en pointillés sur la figure 5) est disposée en série avec la touche T dans la 1^{ère} branche de l'interrupteur de puissance. Ceci permet de limiter les effets de flash, dus à l'appui sur la touche T, lors du passage d'un mode de fonctionnement à un autre. En effet, comme illustré sur la figure 10 entre les instants t5 et t6, en l'absence de cette résistance R, tout appui sur la touche T applique automatiquement la tension Vb aux bornes de la diode électroluminescente. Par contre, l'introduction de la résistance de limitation R permet de limiter le courant traversant la touche et, en conséquence, la puissance dans la diode électroluminescente lors d'un appui sur la touche T. La valeur de la résistance de limitation R est, par exemple, choisie de manière à ce que la puissance transmise à la diode électroluminescente par la touche T corresponde à la puissance minimum de la lampe.

Le circuit de traitement 3 des figures 5 et 6 peut donc reconstituer l'état de la touche et détecter tous les appuis, déterminer leur nombre, leur durée (court, long) ainsi que la durée des intervalles entre appuis pour contrôler en conséquence le fonctionnement de la lampe.

La disposition de la touche de commande T en parallèle sur le transistor de puissance et le blocage périodique, par impulsions fines, du transistor de puissance T1 permettent ainsi de fiabiliser le fonctionnement de la lampe en cas de défaillance d'un composant électronique, tout en permettant de contrôler la lampe en fonction du nombre d'appuis et/ou de la durée d'appui et/ou de l'intervalle entre appuis sur la touche de commande, qui reste la seule interface avec l'utilisateur. En cas de défaillance d'un des composants électroniques de la lampe, l'utilisateur peut toujours utiliser la lampe, par exemple à sa puissance maximale, en appuyant sur la touche T.

Le circuit de traitement 3 peut fournir les impulsions fines de blocage en permanence ou uniquement après détection d'un premier appui (lors du passage de Vs à Vb).

## Revendications

1. Lampe électrique comportant au moins une diode électroluminescente et un interrupteur électronique de puissance, connecté en série entre une source d'énergie (2) et la diode électroluminescente (LED) et contrôlé par un circuit électronique de traitement (3) en fonction de l'état d'un interrupteur de commande (T) connecté à une entrée de commande (E1) du circuit électronique de traitement, lampe **caractérisée en ce que** l'interrupteur de commande (T) est connecté en parallèle sur l'interrupteur électronique de puissance (T1) et **en ce que** le circuit électronique de traitement (3) comporte des moyens de détection de l'état de l'interrupteur de commande (T) appliquant périodiquement sur une électrode de commande de l'interrupteur électronique de puissance (T1) des impulsions fines de blocage de l'interrupteur électronique de puissance.

2. Lampe selon la revendication 1, **caractérisée en ce qu'**une résistance de limitation (R) est connectée en série avec l'interrupteur de commande (T)

3. Lampe selon l'une des revendications 1 et 2, **caractérisée en ce que** l'interrupteur électronique de puissance (T1) et le circuit électronique de commande (3) sont disposés dans une même puce électronique (5).

4. Lampe selon la revendication 3, **caractérisée en ce que** la puce comporte des première et seconde bornes d'alimentation connectées aux bornes de la source d'énergie (2) et une entrée/sortie connectée à la diode électroluminescente.

5. Lampe selon l'une quelconque des revendications 1 à 4, **caractérisée en ce que** l'interrupteur de commande (T) est constitué par une touche.

6. Lampe selon la revendication 5, **caractérisée en ce que** le circuit électronique de traitement (3) contrôle la lampe en fonction du nombre d'appuis successifs sur la touche.

7. Lampe selon l'une des revendications 5 et 6, **caractérisée en ce que** le circuit électronique de traitement (3) contrôle la lampe en fonction de la durée d'appui sur la touche.

8. Lampe selon l'une quelconque des revendications 5 à 7, **caractérisée en ce que** le circuit électronique de traitement (3) contrôle la lampe en fonction de la durée de l'intervalle de temps entre deux appuis sur la touche.
